# EUROPÄISCHE PATENTSCHRIFT

(11) **EP 1 663 746 B1**
(45) Veröffentlichungstag und Bekanntmachung des Hinweises auf die Patenterteilung: **03.01.2007**
(21) Anmeldenummer: 05777435.8
(22) Anmeldetag: 13.08.2005
(51) Int. Cl.: B60S 3/00

(54) **DÜSENANORDNUNG FÜR EINE FAHRZEUGWASCHANLAGE UND VERFAHREN ZUR REINIGUNG EINES FAHRZEUGS**
NOZZLE ARRANGEMENT FOR A MOTOR VEHICLE WASHING UNIT AND METHOD FOR CLEANING A VEHICLE
ENSEMBLE BUSES POUR UNE INSTALLATION DE LAVAGE DE VEHICULES ET PROCEDE DE LAVAGE DE VEHICULE

(30) Priorität: 10.09.2004 DE 102004044264
(43) Veröffentlichungstag der Anmeldung: 07.06.2006
(73) Patentinhaber: WashTec Holding GmbH, 86153 Augsburg (DE)
(72) Erfinder: WIMMER, Georg, 86444 Affing (DE); KÖNIG, Norbert, 86167 Augsburg (DE)
(74) Vertreter: Schwarz, Thomas
(86) Internationale Anmeldenummer: PCT/EP2005/008835
(87) Internationale Veröffentlichungsnummer: WO 2006/027083

(56) Entgegenhaltungen:
- EP-A- 1 044 859
- PATENT ABSTRACTS OF JAPAN Bd. 1997, Nr. 06, 30. Juni 1997 (1997-06-30) -& JP 09 039746 A (NISSEI BUILD KOGYO CO LTD), 10. Februar 1997 (1997-02-10)

## Beschreibung

Die Erfindung betrifft eine Düsenanordnung für eine Fahrzeugwaschanlage, eine mit dieser Düsenanordnung ausgestattete Fahrzeugwaschanlage und ein Verfahren zur Reinigung eines Fahrzeugs mit einer derartigen Düsenanordnung.

Aus dem Stand der Technik sind bereits Düsenanordnungen für Fahrzeugwaschanlagen bekannt, die neben einer Trockendüse auch umschaltbare Hochdruckrohre mit Hochdruckdüsen für die Front- und Heckwäsche eines Fahrzeugs aufweisen. Bei den bekannten Düsenanordnungen weisen die Hochdruckdüsen der umschaltbaren Hochdruckrohre jedoch eine feste Ausrichtung, d.h. einen fest vorgegeben Anstellwinkel auf, um die Front- und Heckpartie eines Fahrzeugs waschen zu können. Dieser Anstellwinkel kann jedoch nicht in optimaler Weise für Front und Heck eines Fahrzeugs gewählt werden, da dann die horizontalen Flächen im Mittelbereich des Fahrzeugs (z.B. das Dach) nicht bzw. nur durch Einbeziehung eines dritten Hochdruckrohres gereinigt werden können.

In der DE 199 16 654 C2 ist eine gattungsgemäße Düsenanordnung mit einer um eine Längsachse motorisch drehbaren Trocknungsdüse offenbart. Die Trocknungsdüse enthält ein um mindestens 360° schwenkbares Düsengehäuse mit einer schlitzförmigen Austrittsdüse. An dem der Austrittsdüse gegenüberliegenden Bereich des Düsengehäuses ist ein in Richtung der Schwenkachse verlaufendes Sprührohr mit mehreren Sprühdüsen zum Aufbringen eines Reinigungs- oder Trocknungsmittels vorgesehen. Ein weiteres Sprührohr mit Sprühdüsen kann zur Zuführung von Waschwasser für die Durchführung einer Hochdruckreinigung vorgesehen sein. Zur Verstellung der Trocknungsdüse ist an dem Düsengehäuses ein Zahnkranz angeordnet, in den ein durch einen Stellmotor angetriebenes Ritzel eingreift.

Aus der EP 1242 272 B1 ist eine Fahrzeugwaschanlage bekannt, die einen an einem Gestell verfahrbaren vertikalen Düsenbalken zur Hochdruckreinigung der Front- und Seitenflächen und einen an dem Gestell in der Höhe verstellbaren horizontalen Düsenbalken zur Hochdruckreinigung des Dachbereichs und der Motorhaube enthält. Bei dieser bekannten Fahrzeugwaschanlage sind aber gesonderte Antriebe für die jeweiligen Düsenbalken zur Front- und Heckwäsche sowie zur Wäsche der horizontalen Fahrzeugflächen erforderlich. Hierfür wird ein entsprechend hoher Antriebs- und Steuerungsaufwand benötigt.

Eine weitere gattungsgemäße Düsenanordnung ist aus dem Dokument JP-A-09 039 746 bekannt.

Aufgabe der Erfindung ist es, eine Düsenanordnung der eingangs genannten Art, eine mit dieser Düsenanordnung ausgestattete Fahrzeugwaschanlage und ein Verfahren zur Reinigung eines Fahrzeugs mit einer derartigen Düsenanordnung zu schaffen, die auch ohne hohen Steuerungs- und Antriebsaufwand eine zuverlässige Hochdruckreinigung und Trocknung eines Fahrzeugs ermöglichen.

Diese Aufgabe wird durch eine Düsenanordnung mit den Merkmalen des Anspruchs 1, durch eine Fahrzeugwaschanlage mit dem Merkmalen des Anspruchs 10 und durch ein Verfahren mit den Merkmalen des Anspruchs 14 gelöst. Zweckmäßige Weiterbildungen und vorteilhafte Ausführungsformen der Erfindung sind Gegenstand der Unteransprüche.

Ein wesentlicher Vorteil der erfindungsgemäßen Düsenanordnung besteht darin, dass die für eine optimale Reinigung erforderliche Anpassung der Düsenstellung bei den unterschiedlichen Fahrzeugbereichen auch ohne gesonderten Antrieb ermöglicht wird. Die zur Veränderung der Düsenstellung erforderliche Bewegung wird über ein entsprechendes Getriebe aus der Schwenkbewegung der vorhandenen Trocknungsdüse abgeleitet. Durch entsprechende Wahl des Übersetzungsverhältnisses kann bei einem vorgegebenen Schwenkwinkel der Trocknungsdüse ein beliebiger Schwenkwinkel der Hochdruckrohre erzielt werden. So können z.B. die Hochdruckdüsen zur Reinigung der horizontalen Flächen vertikal nach unten gerichtet werden, während die Hochdruckdüsen für die Front- und Heckwäsche horizontal ausgerichtet oder leicht (z.B. unter einem Winkel von 15° zur Horizontalen) nach unten gerichtet wird.

In einer besonders zweckmäßigen Ausführungsform der Erfindung ist die Verstellung der Hochdruckrohre mit einer Umschalteinrichtung kombiniert, über welche die beiden Hochdruckrohre wechselseitig mit der Hochdruck-Reinigungsflüssigkeit beaufschlagbar sind. Auf diese Weise lässt sich auch mit möglichst wenigen Verschwenkbewegungen und geringem Steuerungsaufwand eine optimale Reinigung der gesamten Fahrzeugoberfläche erreichen.

Das Getriebe zur Übertragung der Drehbewegung der Trockendüse auf die beiden Hochdruckrohre kann z.B. als Ketten- oder Riementrieb ausgeführt sein. Das Getriebe kann aber auch als Koppelgetriebe mit Verstellhebeln und Schubstangen oder als Reibrad- oder Zahnradgetriebe ausgeführt sein.

In einer weiteren vorteilhaften Ausführung ist in der Trocknungsdüse ein mit dieser zusammen verschwenkbares Düsenrohr mit mehreren Sprühdüsen zum Aufsprühen von chemischen Reinigungsmitteln angeordnet. Die Sprühdüsen sind derart ausgerichtet, dass das chemische Reinigungsmittel bei Bedarf durch die Austrittsdüse der Trocknungsdüse auf die Fahrzeugoberfläche aufgesprüht werden kann.

Weitere Besonderheiten und Vorzüge der Erfindung ergeben sich aus der folgenden Beschreibung zweier Ausführungsbeispiele anhand der Zeichnung. Es zeigen:
- Figur 1: Querschnitte einer ersten Ausführungsform einer Düsenanordnung für eine Fahrzeugwaschanlage in verschiedenen Betriebsstellungen;
- Figur 2: Querschnitte einer zweiten Ausführungsform einer Düsenanordnung für eine Fahrzeugwaschanlage in verschiedenen Betriebsstellungen und
- Figur 3: eine schematische Darstellung eines Verfahrensablaufs bei der Reinigung eines Fahrzeugs mit einer Düsenanordnung gemäß Figur 1 oder 2.

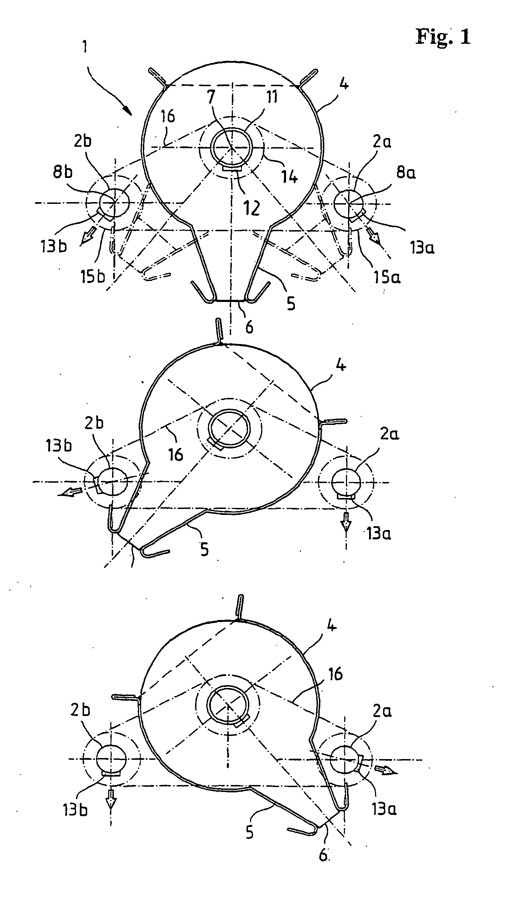

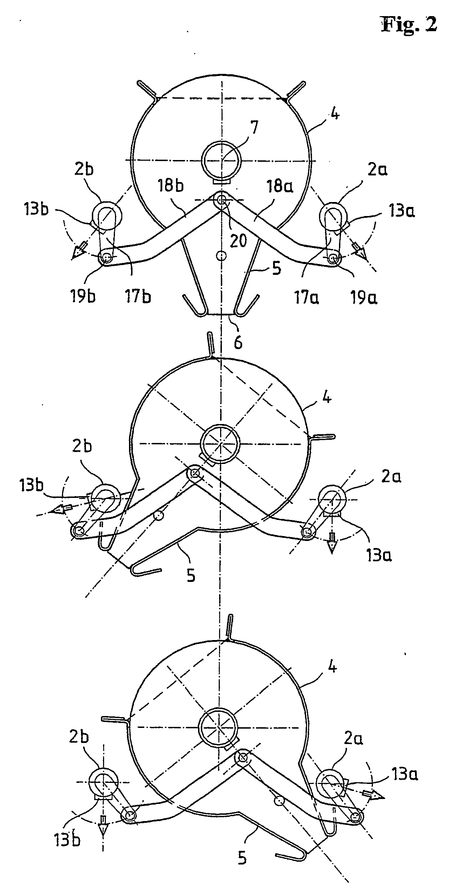

In den Figuren 1 und 2 sind zwei Ausführungsbeispiele einer Düsenanordnung im Querschnitt mit einer verstellbaren Trocknungsdüse 1 und zwei dazu parallelen, verstellbaren Hochdruckrohren 2a und 2b zur Hochdruckreinigung eines Fahrzeugs in unterschiedlichen Betriebsstellungen gezeigt.

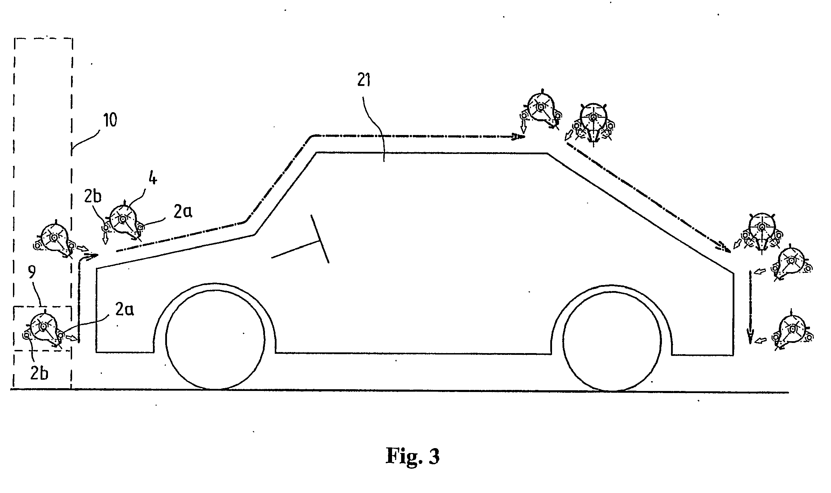

Die Trocknungsdüse 1 enthält ein im wesentlichen rohrförmiges Gehäuse 4 mit einer Austrittsdüse 5, durch deren Austrittsöffnung 6 ein über ein Gebläse erzeugter und in das Gehäuse 4 eingeleiteter Luftstrom zur Trocknung eines Fahrzeugs nach der Fahrzeugwäsche austritt. Die Trocknungsdüse 1 ist bei der gezeigten Ausführung als horizontale Trocknungsdüse ausgeführt, deren Gehäuse 4 und Austrittsdüse 5 quer zur Fahrzeuglängsrichtung über die gesamte Fahrzeugbreite verläuft. Die Trocknungsdüse 1 und die beiden ebenfalls horizontal angeordneten Hochdruckrohre 2a und 2b sind um ihre Längsachsen 7 bzw. 8a und 8b drehbar an einem - in Figur 3 nur schematisch dargestellten - Träger 9 in der Höhe verstellbar an einem an sich bekannten und daher ebenfalls nur schematisch angedeuteten Portal 10 einer Portalwaschanlage angeordnet. Die Düsenanordnung kann aber auch an einem Gestell einer Waschstraße höhenverstellbar angebracht sein. Über einen nicht dargestellten Antrieb ist die Trocknungsdüse 1 um ihre Längsachse 7 motorisch verschwenkbar. Innerhalb des Gehäuses 4 der Trocknungsdüse 1 ist bei der gezeigten Ausführung ein zusammen mit der Trocknungsdüse 1 verschwenkbares Düsenrohr 11 zum Aufsprühen von chemischen Reinigungsmitteln vorgesehen. Das Düsenrohr 11 enthält mehrere Sprühdüsen 12, die derart ausgerichtet sind, dass das Reinigungsmittel durch die Austrittsdüse 5 der Trocknungsdüse 1 austreten kann.

Die beiden Hochdruckrohre 2a und 2b sind rechts und links von der Trocknungsdüse 1 oberhalb der unteren Austrittöffnung 6 der Austrittsdüse 5 angeordnet. Sie enthalten mehrere über die Länge der Hochruckrohre 2 verteilte Hochdruckdüsen 13a bzw. 13b, durch die eine Reinigungsflüssigkeit, vorzugsweise Wasser unter Hochdruck, auf die Fahrzeugoberfläche aufgebracht werden kann. Die beiden um ihre Längsachse 8 drehbaren, parallel zu der Trocknungsdüse 1 verlaufenden Hochdruckrohre 2a und 2b sind über ein Getriebe derart mit der Trocknungsdüse 1 gekoppelt, dass durch Drehung der Trocknungsdüse 1 gleichzeitig eine Verstellung der Hochdruckdüsen 13a und 13b erfolgt.

Bei der in Figur 1 dargestellten Ausführung ist das Getriebe zur Übertragung der Drehbewegung der Trockendüse 1 auf die beiden Hochdruckrohre 2 als Ketten- oder Riemenantrieb ausgeführt. Er besteht aus einem mit der Trockendüse 1 drehfest verbundenen Antriebsrad 14 und jeweils einem mit den Hochdruckrohren 2a und 2b drehfest verbundenen Stellrad 15a bzw. 15b, über die eine Kette oder ein Riemen 16 verläuft. Im Falle eines Kettenantriebs sind das Antriebsrad 14 und die Stellräder 15a und 15b als Kettenräder ausgebildet. Wenn dagegen das Getriebe als Riemengetriebe ausgeführt ist, sind das Antriebsrad 14 und die Stellräder 15a und 15b als Riemenscheiben ausgebildet. In einer geräuscharmen und dennoch formschlüssigen Ausführung kann das Getriebe z.B. als Zahnriemengetriebe mit einem Zahnriemen und dazu passenden Zahnscheiben ausgeführt sein.

Bei dem in Figur 2 gezeigten Ausführungsbeispiel ist das Getriebe als Koppelgetriebe mit Verstellhebeln 17a, 17b und Schubstangen 18a, 18b ausgeführt. An den beiden Hochdruckrohren 2 ist jeweils ein Verstellhebel 17a und 17b verdrehfest angebracht. An dem freien Ende der Verstellhebel 17a und 17b ist das eine Ende je einer abgeknickten Schubstange 18a zw. 18b über jeweils einen Gelenkstift 19a und 19b gelenkig angeordnet. Das andere Ende der beiden Schubstangen 18a und 18b ist über einen Gelenkstift 20 an dem Gehäuse der Trockendüse 1 zu deren Längsachse 7 versetzt angelenkt. Bei der gezeigten Ausführung ist der Gelenkstift 20 unterhalb der Längsachse 7 der Trockendüse 1 angebracht. Die weiteren Bauteile der Düsenanordnung sind entsprechend dem ersten Ausführungsbeispiel ausgeführt und daher auch mit denselben Bezugszeichen versehen.

Bei den beiden vorstehend beschriebenen Getrieben sind die Übersetzungsverhältnisse derart gewählt, dass durch Verschwenken der Trockendüse 1 zwischen ihren Extremstellungen auch die Hochdruckdüsen 13a und 13b der beiden Hochdruckrohre 2a und 2b aus einer vertikalen in eine nahezu horizontale Stellung verschwenkt werden. Für die Drehung der beiden Hochdruckrohre 2a und 2b ist somit kein gesonderter Antrieb erforderlich.

Wenn sich die Trockendüse 1 in einer in den Figuren 1 und 2 oben dargestellten Mittelstellung mit vertikal nach unten gerichteter Austrittsdüse 6 befindet, sind die beiden Hochdruckdüsen 13a und 13b der beiden Hochdruckrohre 2a und 2b gegenüber ihrer vertikal nach unten gerichteten Stellung um einen Winkel von 37,5° nach rechts bzw. links verschwenkt. Wird die Trockendüse 1 aus ihrer Mittelstellung gemäß der mittleren Darstellungen von Figur 1 und 2 um 40° im Uhrzeigersinn gedreht, nehmen die Hochdruckdüsen 13a des rechten Hochdruckrohrs 2a eine vertikal nach unten gerichtete Stellung und die Hochdruckdüsen 13b des linken Hochdruckrohr 2b einen Winkel von 75° gegenüber ihrer vertikal nach unten gerichteten Stellung ein. Wird die Trockendüse 1 dagegen aus ihrer Mittelstellung um 40° entgegen dem Uhrzeigersinn gedreht, nehmen die Hochdruckdüsen 13a des rechten Hochdruckrohrs 2a einen Winkel von 75° gegenüber ihrer vertikal nach unten gerichteten Stellung und die Hochdruckdüsen 13b des linken Hochdruckrohr eine vertikal nach unten gerichtete Stellung ein.

Im folgenden wird der Verfahrensablauf bei der Hochdruckreinigung eines Fahrzeugs 21 mit Hilfe der vorstehend beschriebenen Düsenanordnung anhand der Figur 3 erläutert, wobei davon ausgegangen wird, dass die Düsenanordnung in der Höhe verstellbar an dem Träger 9 des verfahrbaren Portals 10 einer Portalwaschanlage angeordnet ist. Der Aufbau einer Portalwaschanlage ist als solches bekannt, so dass die für das Verständnis der Erfindung nicht erforderlichen Teile der Waschanlage aus Gründen der besseren Übersichtlichkeit wegelassen sind.

Beim Beginn der Hochdruckreinigung befindet sich die Düsenanordnung bezüglich des zu reinigenden Fahrzeugs 21 in einer gemäß Figur 3 links unten gezeigten unteren Stellung, wobei die Trocknungsdüse 1 die in den Figuren 1 und 2 unten dargestellte Schwenkstellung einnimmt. In dieser Stellung sind die Hochdruckdüsen 13a des zum Fahrzeug 21 gewandten vorderen Hochdruckrohrs 2a zur Fahrzeugfront hin schräg nach unten gerichtet, während die Hochdruckdüsen 13b des hinteren Hochdruckrohrs 2b vertikal nach unten zeigen. Zur Reinigung der vertikalen Frontpartie des Fahrzeugs wird die Düsenanordnung nach oben bewegt, wobei das vordere Hockdruckrohr 2a mit Reinigungsflüssigkeit unter Hochdruck beaufschlagt und die Zufuhr der Reinigungsflüssigkeit zum hinteren Hochdruckrohr 2b unterbrochen ist.

Wenn die Düsenanordnung in dieser Stellung über die obere Kante der Fahrzeugfront verfahren ist, folgt die Düsenanordnung der Fahrzeugkontur des Fahrzeugs 21 und wird mit einem vorgegebenen Abstand zunächst über die Fahrzeughaube, die Frontscheibe und das Fahrzeugdach verfahren. Dabei wird die Zufuhr des Reinigungsmittels zum vorderen Hochdruckrohr 2a abgeschaltet und das hintere Hochdruckrohr 2b wird mit Reinigungsflüssigkeit unter Hochdruck beaufschlagt. Für die Reinigung der Fahrzeughaube, der Frontscheibe und des Fahrzeugdachs tritt der Reinigungsstrahl somit aus den Hochdruckdüsen 13b des hinteren Hochdruckrohrs 2b aus.

Für die Reinigung schräger hinterer Fahrzeugflächen kann die Trockendüse 1 unter Beibehaltung der Reinigungsmittelzufuhr zum hinteren Hochdruckrohr 2b in ihre Mittelstellung gedreht werden, wobei dann das Reinigungsmittel von schräg oben auf die Fahrzeugflächen trifft.

Zur Reinigung der vertikalen Heckflächen wird die Trockendüse 1 in die in den Figuren 1 und 2 in der Mitte gezeigte Stellung gedreht. Dann nehmen die Hochdruckdüsen 13b des hinteren Hochdruckrohrs 2b wieder einen Winkel von 75° gegenüber ihrer vertikal nach unten gerichteten Stellung ein und der Sprühstrahl trifft unter einem Winkel von 15° gegenüber der Vertikalen nach unten geneigt auf.

Auf diese Weise wird mit möglichst wenigen Verschwenkbewegungen und geringem Steuerungsaufwand eine optimale Reinigung der gesamten Fahrzeugoberfläche erreicht.

Durch das innerhalb der Trocknungsdüse 1 angeordnete Düsenrohr 11 kann ein chemisches Reinigungsmittel auf die Fahrzeugoberfläche aufgesprüht werden.

Nach Beendigung der Hochdruckreinigung kann die Fahrzeugoberfläche dann über die Trocknungsdüse 1 getrocknet werden, wobei die Trocknungsdüse 1 zwischen den in Figur 1 und 2 dargestellten Stellungen verschwenkt werden kann.

## Patentansprüche

1. Düsenanordnung für eine Fahrzeugwaschanlage mit einer um eine Längsachse (7) motorisch drehbaren Trocknungsdüse (1) und zwei zu der Längsachse (7) parallelen Hochdruckrohren (2a, 2b) mit mehreren Hochdruckdüsen (13a, 13b) für eine Hochdruckreinigung, **dadurch gekennzeichnet, dass** die Hochdruckrohre (2a, 2b) um ihre Längsachsen (8a, 8b) drehbar gelagert und über ein Getriebe (14, 15a, 15b, 16; 17a, 17b, 18a, 18b) mit der Trocknungsdüse (1) zur gemeinsamen Verstellung gekoppelt sind.

2. Düsenanordnung nach Anspruch 1, **dadurch gekennzeichnet, dass** die beiden Hochdruckrohre (2a, 2b) wechselseitig mit Reinigungsflüssigkeit beaufschlagbar sind.

3. Düsenanordnung nach Anspruch 1 oder 2 **dadurch gekennzeichnet, dass** das Getriebe (14, 15a, 15b, 16) als Ketten- oder Riemenantrieb ausgebildet ist, der ein mit der Trocknungsdüse (1) drehfest verbundenes Antriebsrad (14) und jeweils ein mit den Hochdruckrohren (2a, 2b) drehfest verbundenes Stellrad (15a, 15b) enthält, über die eine Kette oder ein Riemen (16) verläuft.

4. Düsenanordnung nach Anspruch 1 oder 2, **dadurch gekennzeichnet, dass** das Getriebe (17a, 17b, 18a, 18b) als Koppelgetriebe mit Verstellhebeln (17a, 17b) und Schubstangen (18a, 18b) ausgeführt ist.

5. Düsenanordnung nach Anspruch 4, **dadurch gekennzeichnet, dass** an jedem Hochdruckrohr jeweils ein Verstellhebel (17a, 17b) verdrehfest angeordnet ist.

6. Düsenanordnung nach Anspruch 4 oder 5, **dadurch gekennzeichnet, dass** an den freien Enden der Verstellhebel (17a, 17b) das eine Ende je einer Schubstange (18a, 18b) über jeweils einen Gelenkstift (19a, 19b) angelenkt ist und dass die anderen Enden der Schubstangen (18a, 18b) über einen Gelenkstift (20) an der Trockendüse (1) angelenkt sind.

7. Düsenanordnung nach einem der Ansprüche 1 bis 6, **dadurch gekennzeichnet, dass** die Trocknungsdüse (1) ein im wesentlichen rohrförmiges Gehäuse (4) mit einer Austrittsdüse (5) enthält.

8. Düsenanordnung nach einem der Ansprüche 1 bis 7, **dadurch gekennzeichnet, dass** in der Trocknungsdüse (1) ein mit dieser zusammen verschwenkbares Düsenrohr (11) mit Sprühdüsen (12) zum Aufsprühen von chemischen Reinigungsmitteln angeordnet ist.

9. Düsenanordnung nach Anspruch 8, **dadurch gekennzeichnet, dass** die Sprühdüsen (12) des Düsenrohrs (11) derart ausgerichtet sind, dass das chemische Reinigungsmittel durch die Austrittsdüse (5) der Trocknungsdüse (1) austreten kann.

10. Fahrzeugwaschanlage, **dadurch gekennzeichnet, dass** sie eine Düsenanordnung nach einer der Ansprüche 1 bis 9 enthält.

11. Fahrzeugwaschanlage nach Anspruch 10, **dadurch gekennzeichnet, dass** die Trocknungsdüse (1) und die beiden Hockdruckrohre (2a, 2b) an einem in der Höhe verstellbaren Träger (9) drehbar gelagert sind.

12. Fahrzeugwaschanlage nach Anspruch 11, **dadurch gekennzeichnet, dass** der Träger (9) an einem in der Längsrichtung des Fahrzeugs (21) verfahrbaren Portal (10) einer Portalwaschanlage angeordnet ist.

13. Fahrzeugwaschanlage nach Anspruch 12, **dadurch gekennzeichnet, dass** der Träger (9) an einem Gestell einer Waschstraße angeordnet ist.

14. Reinigungsverfahren in einer Fahrzeugwaschanlagenüt einer Düsenanordnung nach einem der Ansprüche 1 bis 9, wobei die Verstellung der Hochdruckrohre (2a, 2b) durch die Drehung der Trocknungsdüse (1) erfolgt.

15. Verfahren nach Anspruch 14, **dadurch gekennzeichnet, dass** zur Hochdruckreinigung der Front eines Fahrzeugs (21) das zum Fahrzeug weisende vordere Hochdruckrohr (2a) und zur Hochdruckreinigung der Fahrzeughaube, des Fahrzeugdachs und des Fahrzeughecks das hintere Hochdruckrohr (2b) mit Reinigungsflüssigkeit unter Hochdruck beaufschlagt wird.

16. Verfahren nach Anspruch 14 oder 15, **dadurch gekennzeichnet, dass** die Hochdruckdüsen (13a, 13b) der Hochdruckrohre (2a, 2b) durch die Drehung der Trocknungsdüse (1) zwischen einer vertikal nach unten gerichteten Stellung und eine horizontalen Stellung oder einer gegenüber der horizontalen Stellung leicht nach unten geneigten Stellung verschwenkbar sind.

## Claims

1. Nozzle arrangement for a vehicle washing installation with a drying nozzle (1) which is rotatable by motor about a longitudinal axis (7), and with two high-pressure pipes (2a, 2b) which are arranged parallel to the longitudinal axis (7) and comprise a plurality of high-pressure nozzles (13a, 13b) for high-pressure cleaning, **characterised in that** the high-pressure pipes (2a, 2b) are mounted rotatable about their longitudinal axes (8a, 8b) and coupled to the drying nozzle (1) for joint adjustment through a transmission mechanism (14, 15a, 15b, 16; 17a, 17b, 18a, 18b).

2. Nozzle arrangement according to claim 1, **characterised in that** cleaning fluid can be supplied to either one or the other of the two high-pressure pipes (2a, 2b).

3. Nozzle arrangement according to claim 1 or 2, **characterised in that** the transmission mechanism (14, 15a, 15b, 16) is embodied as a chain or belt drive which comprises a driving wheel (14) which is rotationally fixed to the drying nozzle (1) and in each case a control wheel (15a, 15b) which is rotationally fixed to the high-pressure pipes (2a, 2b) and over which a chain or a belt (16) runs.

4. Nozzle arrangement according to claim 1 or 2, **characterised in that** the transmission mechanism (17a, 17b, 18a, 18b) is embodied as a coupling mechanism with adjusting levers (17a, 17b) and thrust rods (18a, 18b).

5. Nozzle arrangement according to claim 4, **characterised in that** an adjusting lever (17a, 17b) is arranged so that it cannot turn on each high-pressure pipe.

6. Nozzle arrangement according to claim 4 or 5, **characterised in that** one end of each thrust rod (18a, 18b) is articulated to the free ends of the adjusting levers (17a, 17b) by means of a joint pin (19a, 19b) and **in that** the other ends of the thrust rods (18a, 18b) are articulated to the drying nozzle (1) by means of a joint pin (20).

7. Nozzle arrangement according to one of claims 1 to 6, **characterised in that** the drying nozzle (1) comprises an essentially tubular housing (4) with an outlet nozzle (5).

8. Nozzle arrangement according to one of claims 1 to 7, **characterised in that** a nozzle pipe (11) pivotable together with the drying nozzle (1) and having spraying nozzles (12) for spraying chemical cleaning agents is arranged in the drying nozzle (1).

9. Nozzle arrangement according to claim 8, **characterised in that** the spraying nozzles (12) of the nozzle pipe (11.) are aligned such that the chemical. cleaning agent can emerge through the outlet nozzle (5) of the drying nozzle (1).

10. Vehicle washing installation, **characterised in that** it comprises a nozzle arrangement according to one of claims 1 to 9.

11. vehicle washing installation according to claim 10, **characterised in that** the drying nozzle (1) and the two high-pressure pipes (2a, 2b) are mounted rotatably on a carrier (9) which is adjustable in height.

12. Vehicle washing installation according to claim 11, **characterised in that** the carrier (9) is arranged on a portal (10) of a portal washing installation, which portal can be made to travel in the longitudinal direction of the vehicle (21).

13. Vehicle washing installation according to claim 12, **characterised in that** the carrier (9) is arranged on a frame of a washing line.

14. Cleaning method in a vehicle washing installation with a nozzle arrangement according to one of claims 1 to 9, in which the adjustment of the high-pressure pipes (2a, 2b) is effected by the rotation of the drying nozzle (1).

15. Method according to claim 14, **characterised in that** cleaning fluid under high pressure is supplied to the front high-pressure pipe (2a) facing the vehicle for high-pressure cleaning of the front of a vehicle (21) and to the rear high-pressure pipe (2b) for high-pressure cleaning of the vehicle bonnet, vehicle roof and vehicle rear.

16. Method according to claim 14 or 15, **characterised in that** the high-pressure nozzles (13a, 13b) of the high-pressure pipes (2a, 2b) are pivotable by the rotation of the drying nozzle (1) between a position pointing vertically downwards and a horizontal position or a position inclined slightly downwards in relation to the horizontal position.

## Revendications

1. Ensemble de buses pour une installation de lavage de véhicules avec une buse de séchage (1) tournant de façon motorisée autour d'un axe longitudinal (7) et deux tubes haute pression (2a, 2b) parallèles à l'axe longitudinal (7) présentant plusieurs buses haute pression (13a, 13b) pour un nettoyage haute pression, **caractérisé en ce que** les tubes haute pression (2a, 2b) sont logés de manière à pouvoir pivoter autour de leurs axes longitudinaux (8a, 8b) et sont couplés à la buse de séchage (1) par l'intermédiaire d'un mécanisme de transmission (14, 15a, 15b, 16 ; 17a, 17b, 18a, 18b) pour un réglage commun.

2. Ensemble de buses selon la revendication 1, **caractérisé en ce que** les deux tubes haute pression (2a, 2b) peuvent être alimentés en liquide de lavage en alternance.

3. Ensemble de buses selon la revendication 1 ou 2, **caractérisé en ce que** le mécanisme de transmission (14, 15a, 15b, 16) est conçu sous forme de transmission par chaîne ou par courroie, qui comprend une roue d'entraînement (14) reliée de manière à ne pas pivoter à la buse de séchage (1) et une roue de réglage (15a, 15b) reliée de manière à ne pas pivoter à chacun des tubes haute pression (2a, 2b), par l'intermédiaire desquelles passe une chaîne ou une courroie (16).

4. Ensemble de buses selon la revendication 1 ou 2, **caractérisé en ce que** le mécanisme de transmission (17a, 17b, 18a, 18b) est réalisé sous forme de mécanisme articulé avec des leviers de réglage (17a, 17b) et des bielles (18a, 18b).

5. Ensemble de buses selon la revendication 4,
**caractérisé en ce qu'**un levier de réglage (17a, 17b) est fixé de manière à résister à une torsion à chacun des tubes haute pression.

6. Ensemble de buses selon la revendication 4 ou 5,
**caractérisé en ce qu'**une extrémité d'une bielle (18a, 18b) s'articule sur les extrémités libres des leviers de réglage (17a, 17b) par le biais d'un tourillon pivotant (19a, 19b) et **en ce que** les autres extrémités des bielles (18a, 18b) s'articulent sur la buse de séchage par le biais d'un tourillon pivotant (20).

7. Ensemble de buses selon l'une quelconque des revendications 1 à 6, **caractérisé en ce que** la buse de séchage (1) comprend une enveloppe (4) sensiblement tubulaire avec une buse de sortie (5).

8. Ensemble de buses selon l'une quelconque des revendications 1 à 7, **caractérisé en ce que** dans la buse de séchage (1) est disposé un tube à buses (11) pouvant pivoter avec celle-ci et présentant des buses de pulvérisation (12) destinées à pulvériser des agents de nettoyage chimiques.

9. Ensemble de buses selon la revendication 8, **caractérisé en ce que** les buses de pulvérisation (12) du tube à buses (11) sont orientées de telle sorte que l'agent de nettoyage chimique peut sortir par la buse de sortie (5) de la buse de séchage (1).

10. Installation de lavage de véhicules, **caractérisé en ce qu'**elle comprend un ensemble de buses selon l'une quelconque des revendications 1 à 9.

11. Installation de lavage de véhicules selon la revendication 10, **caractérisé en ce que** la buse de séchage (1) et les deux tubes haute pression (2a, 2b) sont logés de manière à pouvoir pivoter sur un support (9) réglable en hauteur.

12. Installation de lavage de véhicules selon la revendication 11, **caractérisé en ce que** le support (9) est disposé sur un portique (10) d'une installation de lavage à portique déplaçable dans le sens longitudinal du véhicule (21).

13. Installation de lavage de véhicules selon la revendication 12, **caractérisé en ce que** le support (9) est disposé sur un bâti d'un tunnel de lavage.

14. Procédé de nettoyage dans une installation de lavage de véhicules avec un ensemble de buses selon l'une quelconque des revendications 1 à 9, le réglage des tubes haute pression (2a, 2b) s'effectuant par la rotation de la buse de séchage (1).

15. Procédé selon la revendication 14, **caractérisé en ce que** pour le tube haute pression avant (2a) tourné vers le véhicule est alimenté en liquide de nettoyage sous haute pression pour le nettoyage haute pression de la face avant d'un véhicule (21) et le tube haute pression arrière (2b) est alimenté en liquide de nettoyage sous haute pression pour le nettoyage haute pression du capot, du pavillon et de l'arrière du véhicule.

16. Procédé selon la revendication 14 ou 15, **caractérisé en ce que** les buses haute pression (13a, 13b) des tubes haute pression (2a, 2b) peuvent, par la rotation de la buse de séchage (1), être pivotées entre une position orientée verticalement vers le bas et une position horizontale ou une position légèrement inclinée vers le bas par rapport à la position horizontale.
